# EUROPEAN PATENT SPECIFICATION

(11) **EP 3 012 506 B1**
(45) Date of publication and mention of the grant of the patent: **17.04.2019**
(21) Application number: 15020199.4
(22) Date of filing: 24.10.2015
(51) Int. Cl.: F16P 3/14, B23K 37/00

(54) **ACTIVE AUTOMATIC SAFETY SYSTEM FOR WORKING ENVIRONMENTS**
EIN ACTIVES AUTOMATISCHE SICHERHEITSSYSTEM FÜR ARBEITSPLÄTZE
UN SYSTÈME DE SÉCURITÉ POUR LES ENVIRONNEMENTS DE TRAVAIL

(30) Priority: 24.10.2014 IT BO20140590
(43) Date of publication of application: 27.04.2016
(73) Proprietor: I.S.I.F. S.R.L., 52020 Castelfranco di Sopra (AR) (IT)
(72) Inventor: Odori, Mauro, 52026 Castelfranco Piandiscò (AR) (IT)
(74) Representative: Ruzzu, Giammario

(56) References cited:
- EP-A2- 2 017 521
- US-A1- 2007 052 543
- US-A1- 2012 286 949

## Description

The present invention relates to safety in working environments, either outdoors, as in the case of worksites, or in closed environments. In particular, the invention relates to a method for operating an automatic active safety system aimed at assuring safe conditions to persons assigned to work in such working environments, with respect to the possible presence of harmful, toxic, lethal or flammable gases, whose presence determines hazards to the persons, for example due to the fire or explosion risk, possible poisoning, chemical burns and others.

As it is known, installation, maintenance and repair interventions, for example of combustible gas pipes, are usually carried out outdoors, while the production operations of various articles are normally arranged and carried out in closed environments.

In each case, either in case of the maintenance interventions carried out outdoors or in case of the production operations which are carried out in closed environments, there is a real need to prepare prevention systems which ensure all the activities being carried out safely, in particular with respect to possible deflagrations, fires, caused by the inflammable and explosive nature of treated materials, or to a possible intoxication or poisoning, with possible, often serious, consequences, caused by the toxic or even lethal nature of the above mentioned materials.

As a pure example, reference is made to the installation, maintenance and repair interventions of the gas transport networks, in general natural gas, bearing in mind that this specification does not limit the application field of the invention in any way.

As it is known, any intervention carried out on the operating gas network, which includes cutting the pipe, generally of steel, and its subsequent connection by welding, makes it necessary for the operator to stop the gas flow.

Such a stopping operation is carried out by the use of suitable plugging machines, known and not described herein as not relevant to the invention.

In spite of the use of such plugging machines, there are still some residual risks of fire and explosion or intoxication. Such risks derive from the fact that, in the majority of cases, the plugging leaves leakages of natural gas, caused by the imperfect adherence of the plug to the inner surface of the pipe. The tightness problems will not be treated, as they are not relevant to the object of the invention.

The above mentioned leakages of natural gas (generally of variable entity and not quantifiable beforehand) can produce explosive mixtures composed of natural gas and air in the work zone. The interventions carried out by the operators often include welding operations which, in the presence of such highly flammable mixtures, lead to an ignition that is a real and considerable danger. Besides the hazard determined by the welding operations, there are innumerable situations that can provoke an ignition for the flammable gas, as it will be readily appreciated by those skilled in the art.

Besides the deflagration and fire hazard, the operators are subjected to the poisoning or intoxication risk, since they unintentionally breathe in the gas abundantly present in the air. The consequences can be even more serious if the substance transported by the pipeline is toxic of even lethal. The entity of leakage is often not big enough to allow its immediate detection, so that when the presence of the toxic substance becomes evident, the environment can be already considerably polluted, making significant the risk of even serious consequences.

If there are hazards described for the operations carried out outdoors, it is easy to imagine that they are even bigger in some closed environments, where the expansion of flammable or toxic gaseous substances, often not detectable in the beginning, creates rapidly an extreme danger condition.

Therefore, there is the need to provide a system, that is able to ensure as safe conditions as possible, a system that can be applied both outdoors and indoors and, more generally, in any environment, in particular work environment, but not only, in which people work and in which fire, deflagration or intoxication hazard condition can occur, due to harmful or lethal gaseous substances, spread in the environment in uncontrolled way.

In spite of the use of such plugging machines, there are still some residual risks of fire and explosion or intoxication. Such risks derive from the fact that, in the majority of cases, the plugging leaves leakages of natural gas, caused by the imperfect adherence of the plug to the inner surface of the pipe. The tightness problems will not be treated, as they are not relevant to the object of the invention.

The above mentioned leakages of natural gas (generally of variable entity and not quantifiable beforehand) can produce explosive mixtures composed of natural gas and air in the work zone. The interventions carried out by the operators often include welding operations which, in the presence of such highly flammable mixtures, lead to an ignition that is a real and considerable danger. Besides the hazard determined by the welding operations, there are innumerable situations that can provoke an ignition for the flammable gas, as it will be readily appreciated by those skilled in the art.

Besides the deflagration and fire hazard, the operators are subjected to the poisoning or intoxication risk, since they unintentionally breathe in the gas abundantly present in the air. The consequences can be even more serious if the substance transported by the pipeline is toxic of even lethal. The entity of leakage is often not big enough to allow its immediate detection, so that when the presence of the toxic substance becomes evident, the environment can be already considerably polluted, making significant the risk of even serious consequences.

If there are hazards described for the operations carried out outdoors, it is easy to imagine that they are even bigger in some closed environments, where the expansion of flammable or toxic gaseous substances, often not detectable in the beginning, creates rapidly an extreme danger condition.

Document US 2007/0052543 describes a method for operating a security system according to the preamble of claim 1 in which closed environments are set up in correspondence of the areas of intervention of containment structures or conveyance of flammable substances. The technical solution described involves the construction of a room that encloses the area of intervention and in which openings are made and equipped with fans. The gas sensor activates the fans upon evidence of the presence of flammable gas inside the chamber.

Document US 2012/0286949 describes instead a system for detection of the operators falls within a construction site. The system requires that operators wear a motion sensor that is able to detect accelerated and abruptly interrupted movements, which may indicate the fall of the worker who is equipped with it. This is not, therefore, a system suitable to operate in the prevention, as it intervenes only after the accidental event is occurred.

Therefore, there is the need to provide a system, that is able to ensure as safe conditions as possible, a system that can be applied both outdoors and indoors and, more generally, in any environment, in particular work environment, but not only, in which people work and in which fire, deflagration or intoxication hazard condition can occur, due to harmful or lethal gaseous substances, spread in the environment in uncontrolled way.

### OBJECTS OF THE INVENTION

Therefore, it is an object of the present invention to propose a method for operating an automatic active safety system, in particular for working environments, for controlling delimited spaces, which is able to carry out preventing action aimed at allowing the operators to carry out any installation, maintenance or production activity in safe conditions.

The object of the invention is to propose an instrument that allows to carry out the above mentioned preventing action, which is easy to manage and whose operation is reliable.

Another object of the invention is to propose a method for operating an automatic active safety system that allows the issue of periodic reports, for example, daily, complete and precise, which list all the events that happened during the working day. This in order to analyze and optimize the safety conditions in the working area over time and facilitate the control of the operation mode for the person in charge of the supervision of the safety conditions. Furthermore, this feature must enable a certification of the execution of works in safety conditions also by records on paper documents or in digital form.

The method for operating the automatic active safety system must also be able at first to inform, in real time, about a hazard situation that is being created and then, if the hazard situation persists, to intervene actively so as to implement most efficacious precautionary measures.

The proposed system must operate as indicated previously, however without hindering the operators' activity, and must also ensure that all the instruments and devices necessary for its proper operation are active and well arranged.

Thanks to the above mentioned features, as a result of detection of the dangerous gaseous substances, the system will be able to carry out precautionary actions aimed at preventing the occurrence of undesired or serious consequences, such as explosions, fires or intoxications, also lethal, of the operators. The system will be able to intervene on the apparatuses being used to prevent them from working any further and to allow the persons to move to as safe as possible conditions.

It is also an object of the present invention to propose a working method, according to which the proposed system can operate in a regular way.

These and other objects of the invention are obtained by the system and method described in the claim 1.

Further details and embodiments will become evident from the dependent claims.

### BRIEF DESCRIPTION OF THE DRAWINGS

The details of the invention which are non evident from what above, can be defined by the following detailed description of an exemplifying embodiment of the system and method under discussion, together with the analysis of the enclosed drawings, in which:
Figure 1 is a simplified block diagram of the system subject of the present invention;
Figure 2 is a schematic and illustrative view of a pipe section, in correspondence to which a site for intervention of maintenance is arranged;
Figure 3 is a simplified flow diagram that explains the operation of the system and method under discussion.

### DETAILED DESCRIPTION OF THE INVENTION

The operation method of the system proposed by the invention is based on a preventive solution, which can ensure the operators to execute all the activities in the involved work areas, by means of an instrument, which is easy to manage and whose operation is reliable.

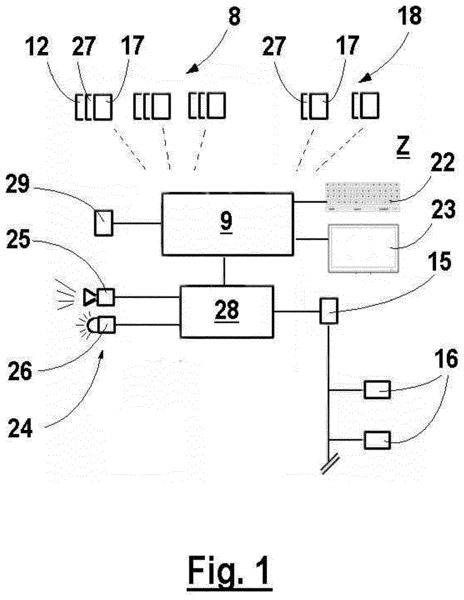

With reference to the above mentioned figures, and in particular to Figure 1, in the following, the automatic active safety system of the invention is described, for safe operating in outdoor work areas or in closed environments, with respect to the presence of flammable and/or toxic gases.

In the present specification, for sake of simplicity, the term "flammable" will be used to indicate any gaseous substance which is not only flammable, but also explosive. The fire or the explosion can be started by the favourable conditions or events that occur in the work environment, in particular for the presence of operating means used by the operators. The electric or pneumatic operating means can easily generate sparks or produce particles of overheated or incandescent material.

The term "toxic gas" is meant to indicate all the gaseous substances that can cause intoxications, poisoning and even be lethal to the operators who come in contact with them or breathe them in.

Consequently, it is vital to detect the presence of such flammable or toxic gaseous substances and to estimate their quantities. In order to detect the substances and estimate their quantity, the system proposed by the invention comprises a series of metering devices 8, 18.

These metering devices 8, 18 can detect the amount of gaseous substance present in, or in proximity of the work areas. They include one or more portable metering devices 8 and one or more fixed metering devices 18.

The portable metering devices 8 are assigned to each operator and they can be associated with or embedded in PPE (personal protective equipment) provided to each operator. Each of them is constituted by an explosimeter device 17, of known type and adapted to detect the presence of dangerous amounts of flammable gas. This device can be connected with a toxic gas detector adapted to detect the presence of toxic or lethal gases.

In Figure 1, the explosimeter devices 17 and detector devices 27 are not shown in their correct positions, as they are only sketched.

The fixed detector devices 18 are situated in one or more of the most hazardous zones of the work areas, where it is more likely to detect the presence and/or deposition of flammable or toxic gases.

The whole system is managed by a control unit 9, connected to the metering devices 8, 18 by means of a wireless connection. It is understood that a different form of connection, for example a wire connection in case of fixed metering devices 18, can be possibly used without departing from the protection scope of the present invention.

The control unit 9 comprises automatic active intervention means 28, aimed at signalling the hazard level and at intervening actively as it will be better explained in the following.

In accordance with the invention, the control unit 9, in cooperation with said metering devices 8, 18, can detect two threshold values of the hazard level, the low threshold value B and the high threshold value A, respectively.

If the low threshold value B, considered as the attention value, is reached, due to a leakage or in any case to an uncontrolled diffusion of a flammable or toxic gaseous substance, the control unit 9, by means of the automatic active intervention means 28, activates the visual and/or acoustic alarm means 24, such as a siren 25 and a flashing light 26.

On the other hand, if the high threshold value A, considered the hazard value, is reached, the control unit 9, by means of the automatic active intervention means 28, prevents operation of the operating means 16, which constitute a potential source of fire or explosion ignition. This can happen, for example, through the intervention on one or more contactors 15 mounted inside the chassis of the control unit 9. Alternatively, the contactors 15 can be situated along the power line of the operating means 16. The latter include usually at least one electric welder, and electric tools, such as grinders, milling cutters, drills, etc.

The system comprises also a recording device 29, provided for recording the safety condition of work areas, when the hazard level remains below the low attention threshold B. In practice, the safety condition during the working hours is continuously monitored and recorded, for example in suitable memory devices. At the end of the work shift or working day, a report is printed, which certifies the condition of maintenance of the required safety standards.

Obviously, the report can be registered also on media supports, such as optical discs, CDROM, DVD, USB flash memory drives or transmitted in telematic way, through the Internet or telephone network or any other telematic transmission way.

The receiver of the report can be an inner office of the Company running the works or the competent authorities that have asked for the certification.

The recording device 29 records the warning condition, when the hazard level reaches and/or exceeds said low threshold B, and the hazard condition, when the hazard level reaches and/or exceeds said high threshold A.

The occurrence of each of the two possibilities is included in the report, certifying that the system has intervened to assure the safety of the operators.

Besides the explosimeter devices 17 and sensors 27, there can be provided, if necessary, PPE sensing devices 12, likewise connected to the control unit 9 with a wireless connection. The PPE sensing devices 12 are aimed at detecting the real and continued use of the PPE by the respective operators and at informing accordingly the control unit 9, so as to enable or disable activation of the operating means 16.

In the event that one or more of the PPE is not worn correctly and continuously, the PPE detecting device, constituted for example by a motion sensor, a pedometer or the like and/or with help of the active transponder technology, detects the anomaly and informs the control unit 9, which interrupts or disables the operating means 16 in the whole site.

In an interesting embodiment of the invention, each explosimeter 17 or sensor 27 assigned to an operator who works in the protected workplace is arranged so as to act as a collector of the signals coming from the transponders of the PPE assigned to the same operator, and to inform the control unit 9 that the PPE are actually worn by the given operator. For this purpose, the explosimeter 17 or sensor 27 includes receivers of short range signals emitted by the transponders of the PPE associated thereto. The explosimeter 17 or sensor 27 can therefore detect and signal directly to the control unit 9 any case of an operator who should wear a PPE and does not.

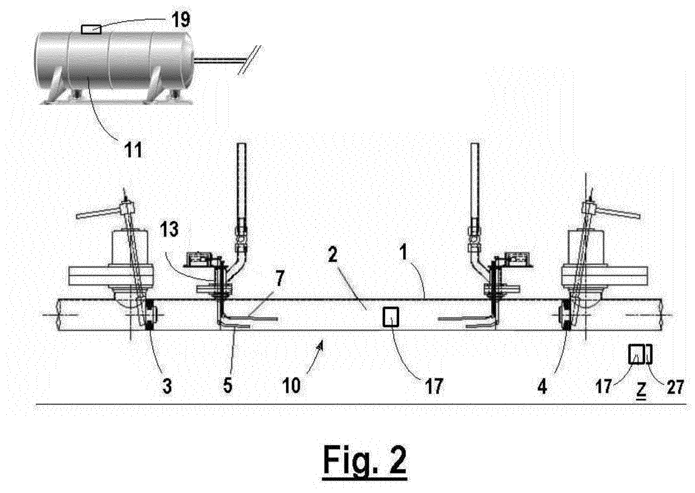

Now an application example of the system illustrated above will be described, implemented in a site arranged for the intervention on a pipe conducting natural gas. The example, illustrated in Figure 2, is not to be considered limiting and constitutes only one of the numberless cases, in which the system according to the invention can be applied.

Figure 2 illustrates a section of a pipe for conducting natural gas, on which a maintenance intervention is to be executed, for example, a piece of the pipe is to be substituted.

In order to carry out the intervention in safety conditions, the flow of gas is interrupted by plugging upstream and downstream of the intervention zone 2 of the pipe 1, and an inert gas is introduced in the part included between the two plugging points 3, 4 in order to prevent the formation of explosive mixtures.

In accordance with the invention, the electric tools 16 (in particular, the welders) are connected to the supply sources through a contactor 15, acted upon by the control unit 9.

It is specified that the following description will leave out all the elements and components (switches, cables and connecting pipes, pressure switches, adjusting means, etc.) which can be easily deduced, by those expert in the art, from the description, and that, as understood, they are not critical to the comprehension of the operation of the system as a whole.

A metering device 18 is applied in the pipe 1, for measuring, by means of a sensor device 27 of natural gas, the amount by volume of the natural gas with respect to the mixture that is being formed with the air.

The inert gas, for example nitrogen, is taken from a tank 11 and introduced into the pipe 1 by means of an introduction channel 5, connected to a multiple connector 13 on the side joined to the pipe 1. The means for taking and leading the nitrogen from the tank 11 to the connector 13 have not been illustrated and will not be described since they are of known type and within the reach of those skilled in the field.

In this example, the control unit 9 is also able to calculate, on the basis of the measure of the amount of natural gas present in the mixture of gas inside the pipe 1, the optimal quantity of the inert gas to be introduced to the pipe. The control of the quantity of introduced inert gas is carried out by the ON/OFF electrovalves 20 and PWM electrovalves 21.

When the work shift begins, each operator takes on suitable PPE (personal protection equipment) and the respective moveable metering device 8, with the PPE sensing device associated thereto, if necessary. Then he/she logs himself/herself in the control unit 9, for example by means of a keyboard 23 and a display 22, which operate in known way and are used also for the programming and operating the system.

The system verifies automatically if all the PPE are duly worn and the monitoring of the constant use of PPE continues for the whole work shift or the working day.

In case of positive result, the control unit 9 enables the activation of the operating means consisting of the tools 16, for example electric but possibly also pneumatic.

Then the control unit 9 begins to receive the data from the moveable metering devices 8 and fixed metering devices 18.

If one or more sensors detects that the low threshold B of the hazard level has been reached (warning level, that is, presence of at least one of the controlled gases in larger quantity than the value officially considered absolutely harmless for the safety of the operators), then the control unit 9 operates the automatic intervention means 28 to activate acoustic and/or visual warning devices, constituted by a siren 25 and a flashing light 26.

The recording device 29 records the event in its inner memory. If the situation comes back to normality, the warning situation stops and the work can start again in safety conditions.

If the high hazard threshold A level is reached (presence of at least one of the controlled gases in amounts which are potentially sufficient to start a fire, explosion within the pipe or nearby, or in the work areas, with a consequent risk to start a fire and/or intoxications), then the control unit 9 operates the active intervention means 28 to disable the contactor 15 in order to interrupt operation of the tools 16.

Also in this case, the recording device 29 records the hazard event and mentions it in the subsequent certification report.

In case of works aimed at repairing a portion of pipe 1, during the normal operation of the system, the control unit 9 determines also the amount of nitrogen to be introduced into the pipe 1 and it can decide to interrupt the operation of the tools 16, by means of a pressure sensor 19 associated with the tank of inert gas, in order to avoid hazard situations caused by the lack of gas.

At the end of the shift or day, the operators log out from the control unit 9 and the report of certification of the safety conditions is issued or sent.

The safety system according to the invention is also able to execute operations which are officially defined as "certified restoration" of the portions of pipe or tanks which must be freed from harmful or potentially explosive products, temporarily or permanently.

For this purpose, it is enough to introduce an explosimeter 17 or sensor 27 into the pipe or tank to be restored, and make the control unit 9 apply the cycle of safety measures with the introduction of nitrogen according to what has been described previously, until an environment is obtained in which the low threshold B of the gas or gases to be controlled is not exceeded. Reaching of such threshold B can be registered by the control unit 9 and consequently, the result that certifies the positive result of the whole operation can be printed.

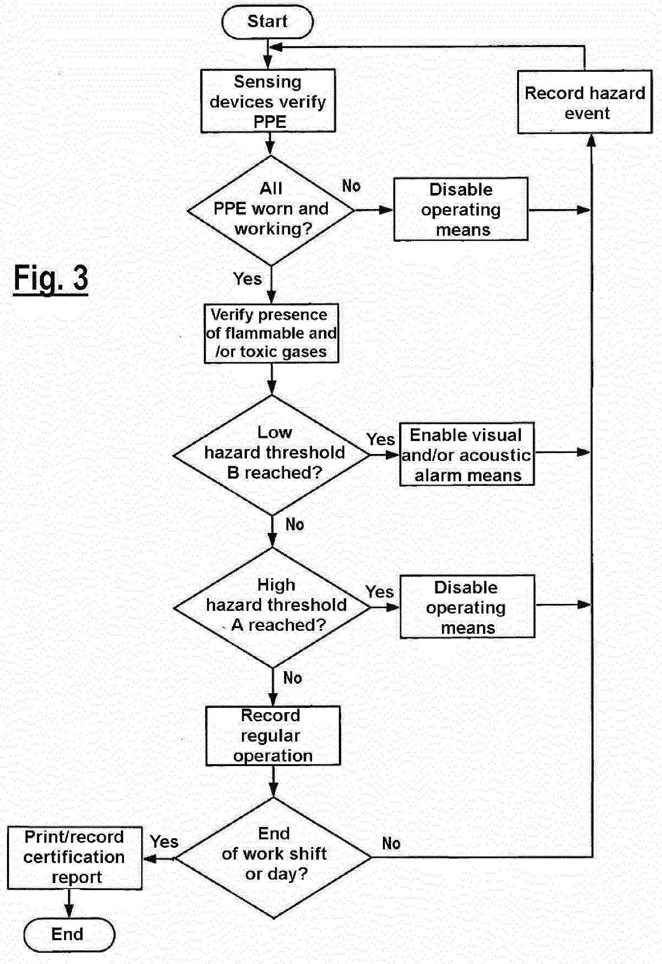

In short, with reference to the simplified flow diagram of Figure 3, the above described system carries out a method for obtaining safe operation conditions in the outdoor work areas or in closed environments, which includes:
- continuous detection of the use and functionality of the PPE (personal protection equipment);
- continuous detection of the presence of flammable and/or toxic gas in the working zones or nearby;
- communication of the collected data to a control unit 9 for managing the system, which estimates the hazard level with respect to two danger threshold values, respectively a low threshold B, below which the present amount of flammable and/or toxic gas does not constitute a hazard condition, and a high threshold A, over which the present amount of flammable and/or toxic gas constitutes an extreme hazard condition;
- enabling the operation of the operating means, when the hazard level is below the low threshold B (warning level) and the PPE are correctly worn and working;
- emission of a visual and/or acoustic alarm, when the hazard level exceeds the low threshold B, or attention level,
- disabling the operation of the operating means when the hazard level reaches and/or exceeds the high threshold A, or hazard level;
- recording the safety condition of work areas, when the hazard level remains below the low threshold B;
- recording the hazard condition, when the hazard level reaches and/or exceeds the low threshold B or the high threshold A;
- issuing a written report or a report recorded on multimedia support or transmitted by telematic means, which certifies the maintenance of safe conditions, or the occurrence of hazard situations (low threshold B) or extreme hazard (high threshold A) during the time interval being considered.

The advantages deriving from the use of the system and method proposed by the present invention are obvious.

The invention includes a system able to enssure maximum safety conditions, which can be applied both in outdoor environments and closed ones, and, more generally, in any environment, in particular work environment, but not only, in which people work and in which fire, deflagration or intoxication hazard condition can occur, due to harmful or lethal gaseous substances, spread out in the environment in the uncontrolled way.

The safety system acts in an automatic way, with a precautionary action which allows to safely carry out any installation, maintenance or production activity, by means of an instrument which is easy to manage and whose functioning is reliable.

The system enable issuing of periodic reports, for example, daily, complete and precise, which list all the events that happened during the working day. This in order to analyze and optimize the safety conditions in the working area over time and facilitate the control of the operation mode for the person in charge of the supervision of the safety conditions. Furthermore, this feature allows issuing a certificate about the execution of works in safety conditions also by records on paper documents or in digital form.

After having informed in real time that the danger situation is being created, if the hazard situation persists, the safety system intervenes actively to prevent operation of the apparatuses being used with an efficacious action.

Moreover, the proposed system does not prevent the operators' activity, on the contrary, it ensures that all the instruments and devices necessary for its proper operation are active and well arranged.

It is understood that what has been described above, is exemplifying and not limiting, therefore possible variations and/or improvements of realization/functional character are considered within the scope of the invention, as described above and claimed in the following.

## Claims

1. A method for operating an automatic active safety system, for safe operation in outdoor or indoor work areas with respect to the presence of flammable and/or toxic gases, with operating means (16) present in such areas, the system including:
- one or more metering devices (8, 18) for measuring the amount of gaseous substance present in, or in proximity of said work areas (Z);
- a control unit (9) for management of the system, connected by wired or wireless connection to said metering devices (8, 18) and provided with means for determining, based on the amount of gaseous substance detected in or in proximity of said work areas (Z), levels of these flammable and/or toxic gases present in the same work areas (Z) corresponding to increasing hazard levels for the operators;
- automatic active intervention means (28) designed to signal the hazard level present in the same work areas (Z) to said operators, to activate visual and/or acoustic alarm means (24) and to intervene, if necessary, on the operation of said operating means (16) being used by said operators.
said system being **characterized in that**:
one or more fixed metering devices (18) are also provided, which are located in one or more spots of greater hazard of said work areas (Z) and connected with a wireless connection to said control unit (9);
as many portable metering devices (8) are provided as operators are present, each portable metering device (8) being supplied to a respective working operator and connected with a wireless connection to said control unit (9), said metering devices (8) are associated with or embedded in PPE (personal protective equipment) provided to each working operator,
**characterized in that** said fixed metering devices (18), in use, are also placed inside a pipe (1) of the gas distribution network for which the installation, repair or maintenance is being performed, in a portion of said pipe to be restored, or in a container to be restored.

2. The method for operating the system according to claim 1, wherein said control unit (9), in cooperation with said metering devices (8, 18), is able to detect two threshold values, respectively a low one (B) and a high one (A), of said hazard level, to activate visual and/or acoustic alarm means (24) when said low threshold value (B) is reached, and to inhibit the operation of operating means which constitute a potential source of fire or explosion ignition, on reaching said high threshold value (A).

3. The method for operating the system according to claim 2, wherein a recording device (29) is provided for recording the safety condition of work areas (Z), when the hazard level remains below said low threshold (B); said recording device (29) being intended to record the hazard condition, when the hazard level reaches and/or exceeds said low threshold (B), and to record the extreme hazard condition, when the hazard level reaches and/or exceeds the high threshold (A); with issue means provided for issuing a written report or a report recorded on multimedia support or transmitted by telematic means, which certifies the maintenance of safe conditions, in the event that the low threshold (B) is not reached or exceeded, and for issuing a written report or a report recorded on multimedia support or transmitted by telematic means, which shows the occurrence of hazard situations or extreme hazard situations during the time interval being considered.

4. The method for operating the system according to any of claims 1 to 3, wherein DPI sensing devices (12) are connected with a wireless connection to said control unit (9), designed to detect, by means of active transponders, the effective and continued use of said PPE by the respective working operators and to inform accordingly said control unit (9) to enable or disable activation of said operating means (16).

5. The method for operating the system according to any of claims 1 to 4, wherein said metering devices (8, 18) consist of explosimeter devices (17), designed to detect the presence of hazardous amounts of flammable gas in the vicinity of working operators and in said work areas (Z) and/or sensor devices (27) for toxic gas, designed to detect the presence of toxic or lethal gases.

6. The method for operating the system according to claim 1, wherein is provided with means for dispensing an inert gas intended to prevent the formation of explosive mixtures; said system being able, through said control unit (9), to define the optimum amount of inert gas to be introduced in said portion of pipe (1) or into the container for causing and keeping a condition below a hazard threshold, based on the measure of the amount of explosive gases and/or toxic substances present within the same.

7. The method for operating the system according to claim 1, wherein said metering devices (8) and/or sensor devices (27) include means for communication with the above mentioned PPE devices associated with the operator to whom they are provided, said metering devices (8) and/or sensor devices (27) being able to receive confirmation from each of said PPE devices about correct installation on the relevant operator, and to transmit that information to said control unit (9).

## Patentansprüche

1. Verfahren zum Betreiben eines automatischen aktiven Sicherheitssystems für den sicheren Betrieb im Außen- oder Innenbereich in Bezug auf das Vorhandensein von brennbaren und/oder toxischen Gasen, mit Betriebsmitteln (16), die in diesen Bereichen vorhanden sind, wobei das System das Folgendes umfasst:
- eine oder mehrere Messvorrichtungen (8, 18) zum Messen der Menge der gasförmigen Substanz, die in oder in der Nähe der Arbeitsbereiche (Z) vorhanden ist;
- eine Steuereinheit (9) zur Verwaltung des Systems, die durch eine drahtgebundene oder drahtlose Verbindung mit den Messvorrichtungen (8, 18) verbunden ist, und die mit Mitteln zum Bestimmen der Werte dieser brennbaren und/oder toxischen Gase, die einer Erhöhung der Gefahrenstufe für die Bediener entsprechen, basierend auf der Menge der gasförmigen Substanz ausgestattet ist, die in oder in der Nähe der Arbeitsbereiche (Z) nachgewiesen wird;
- automatische aktive Eingriffsmittel (28), die den Bedienern das in denselben Arbeitsbereichen (Z) vorhandene Gefahrenniveau signalisieren und visuelle und/oder akustische Warnmittel (24) aktivieren, un die gegebenenfalls in den Betrieb der von den Bedienern verwendeten Betriebsmittel (16) eingreifen;
wobei das Verfahren **dadurch gekennzeichnet ist, dass** eine oder mehrere feste Messvorrichtungen (18) vorgesehen sind, die sich an einer oder mehreren Stellen der Arbeitsbereiche (Z) mit erhöhter Gefährdung befinden und die mit einer drahtlosen Verbindung mit der Steuereinheit (9) verbunden sind;
so viele tragbare Messgeräte (8) wie Bediener vorgesehen sind, wobei jede tragbare Messvorrichtung (8) einem jeweiligen arbeitenden Bediener zugeführt und mit einer drahtlosen Verbindung mit der Steuereinheit (9) verbunden wird, die Messvorrichtungen (8) mit PSA (Persönliche Schutzausrüstung), die jedem Bediener zur Verfügung gestellt werden, verbunden oder in diese eingebettet sind,
**dadurch gekennzeichnet, dass** die im Gebrauch befindlichen festen Messvorrichtungen (18) ebenfalls in einer Leitung (1) des Gasverteilungsnetzes, für die die Installation, Reparatur oder Wartung durchgeführt wird, in einem Abschnitt der zu sanierenden Leitung oder in einem wiederherzustellenden Behälter angeordnet sind.

2. Verfahren zum Betreiben des Systems nach Anspruch 1, wobei die Steuereinheit (9) in Zusammenarbeit mit den Messvorrichtungen (8, 18) zwei Schwellenwerte des Gefahrenniveaus, jeweils einen niedrigen (B) und einen hohen (A), erfasst, um visuelle und/oder akustische Alarmmittel (24) zu aktivieren, wenn der untere Schwellenwert (B) erreicht wird, und um den Betrieb von Betriebsmitteln, die eine potenzielle Quelle für Feuer- oder Explosionszündung darstellen, bei Erreichen des hohen Schwellenwerts (A) zu verhindern.

3. Verfahren zum Betreiben des Systems nach Anspruch 2, wobei eine Aufzeichnungsvorrichtung (29) zum Aufzeichnen des Sicherheitszustandes von Arbeitsbereichen (Z) vorgesehen ist, wenn das Gefahrenniveau unter dem niedrigen Schwellenwert (B) bleibt; die Aufzeichnungsvorrichtung (29) dazu bestimmt ist, den Gefahrenzustand aufzuzeichnen, wenn das Gefahrenniveau den niedrigen Schwellenwert (B) erreicht und/oder überschreitet, und das Aufzeichnungsgerät die extreme Gefahrenbedingung aufzeichnet, wenn das Gefahrenniveau den hohen Schwellenwert (A) erreicht und/oder überschreitet; woebi Mittel zur Erstellung eines schriftlichen Berichts oder eines Berichts vorgesehen sind, der über multimediale Unterstützung aufgezeichnet oder telematisch übermittelt wurde, die die Aufrechterhaltung sicherer Bedingungen für den Fall, dass der niedrige Schwellenwert (B) nicht erreicht oder überschritten wird, bescheinigen, und das Aufzeichnungsgerät einen schriftlichen Bericht oder einen auf multimedialer Unterstützung aufgezeichneten oder telematisch übertragenen Bericht ausgeben, die das Auftreten von Gefährdungssituationen oder extremen Situationen anzeigt.

4. Verfahren zum Betreiben des Systems nach einem der Ansprüche 1 bis 3, wobei DPI-Sensorvorrichtungen (12) mit einer drahtlosen Verbindung mit der Steuereinheit (9) verbunden sind, die dazu, mittels aktiver Transponder den effektiven und fortgesetzten Gebrauch der PSA durch die jeweiligen Arbeiter zu erkennen bestimmt ist, und die die Steuereinheit (9) entsprechend zu informieren, um die Wirkung der Betriebsmittel (16) zu aktivieren oder zu deaktivieren.

5. Verfahren zum Betreiben des Systems nach einem der Ansprüche 1 bis 4, wobei die Messvorrichtungen (8, 18) aus Explosionsmessvorrichtungen (17) bestehen, die dazu bestimmt sind, das Vorhandensein gefährlicher Mengen an brennbarem Gas in der Nähe von Bediener und in den Arbeitsbereichen (Z) zu erfassen, und aus Sensorvorrichtungen (27) für toxisches Gas, die dazu bestimmt sind, das Vorhandensein von toxischen oder tödlichen Gasen zu erfassen.

6. Verfahren zum Betreiben des Systems nach Anspruch 1, wobei die Zentraleinheit (9) mit Mitteln zur Abgabe eines Inertgases versehen ist, das die Bildung explosiver Gemische verhindern soll; wobei das System durch die Steuereinheit (9) in der Lage ist, die optimale Menge an Schutzgas zu definieren, die in den Abschnitt des Rohres (1) oder in den Behälter einzubringen ist, um einen Zustand unterhalb einer Gefahrenschwelle zu verursachen und aufrechtzuerhalten, auf Grund vom Maß für die Menge der vorhandenen explosiven Gase und/oder giftigen Stoffe.

7. Verfahren zum Betreiben des Systems nach Anspruch 1, wobei die Messvorrichtungen (8) und/oder Sensorvorrichtungen (27) Mittel zur Kommunikation mit den oben genannten PSA-Vorrichtungen beinhalten, die dem Bediener zugeordnet sind, dem sie bereitgestellt werden, wobei die Messvorrichtungen (8) und/oder Sensorvorrichtungen (27) in der Lage sind, von jeder der PPE-Vorrichtungen eine Bestätigung über die korrekte Installation bei dem betreffenden Bediener zu empfangen und diese Informationen an die Steuereinheit (9) zu übertragen.

## Revendications

1. Procédé de fonctionnement d'un système de sécurité active automatique, pour un fonctionnement sûr dans des zones de travail extérieures ou intérieures en ce qui concerne la présence de gaz inflammables et/ou toxiques, avec de moyens de commande (16) présents dans ces zones, le système comprenant:
- un ou plusieurs dispositifs de mesure (8, 18) pour mesurer la quantité de substance gazeuse présente dans ou à proximité desdites zones de travail (Z);
- une unité de commande (9) pour la gestion du système, reliée par connexion filaire ou sans fil auxdits dispositifs de mesure (8, 18) et munie de moyens pour déterminer les niveaux de ces gaz inflammables et/ou toxiques en fonction de la quantité de substance gazeuse détectée dans ou à proximité desdites zones de travail (Z), correspondent à des niveaux de danger croissants pour les opérateurs;
- des moyens d'intervention active automatique (28) conçus pour signaler auxdits opérateurs le niveau de danger présent dans les mêmes zones de travail (Z), ces moyens étant conçus pour activer des moyens d'alarme visuels et/ou acoustiques (24) et pour intervenir, si nécessaire, sur le fonctionnement desdits moyens de commande (16) utilisés par lesdits opérateurs,
ledit procédé étant **caractérisée en ce que**:
un ou plusieurs dispositifs de mesure fixes (18) sont également prévus, qui sont situés dans un ou plusieurs points de plus grand danger desdites zones de travail (Z) et reliés à une connexion sans fil à ladite unité de commande (9);
autant d'appareils de mesure portatifs (8) fournis que d'opérateurs sont présents, chaque dispositif de mesure portable (8) étant fourni à un opérateur de travail respectif et connecté à une connexion sans fil à ladite unité de commande (9), lesdits dispositifs de mesure (8) peuvent être associés ou intégrés à un EPI (équipement de protection individuelle) fourni à chaque opérateur travaillant,
**caractérisé en ce que** lesdits dispositifs de mesure fixes (18), en service, sont également placés à l'intérieur d'une conduite (1) du réseau de distribution de gaz pour lequel l'installation, la réparation ou l'entretien est effectué, dans une partie de ladite conduite à restaurer, ou dans un récipient à restaurer.

2. Procédé de fonctionnement du système selon la revendication 1, dans laquelle ladite unité de commande (9), en coopération avec lesdits dispositifs de mesure (8, 18), peut détecter deux valeurs de seuil, respectivement une valeur faible (B) et une valeur élevée (A), dudit niveau de danger, pour activer des moyens d'alarme visuels et/ou acoustiques (24) lorsque ladite valeur seuil basse (B) est atteinte, et pour inhiber le fonctionnement de moyens de fonctionnement qui constituent une source potentielle d'incendie ou d'explosion, lorsque ladite valeur seuil haute (A) est atteinte.

3. Procédé de fonctionnement du système selon la revendication 2, dans laquelle un dispositif d'enregistrement (29) est prévu pour enregistrer l'état de sécurité des zones de travail (Z), lorsque le niveau de danger reste inférieur audit seuil bas (B); ledit dispositif d'enregistrement (29) est destiné à enregistrer la condition de danger, lorsque le niveau de danger atteint et/ou dépasse ledit seuil bas (B), et à enregistrer la condition de danger extrême, lorsque le niveau de danger atteint et/ou dépasse le seuil élevé (A); des moyens de délivrance étant prévus pour émettre un rapport écrit ou un rapport enregistré sur support multimédia ou transmis par des moyens télématiques, qui certifie le maintien de conditions de sécurité, au cas où le seuil bas (B) n'est pas atteint ou dépassé, et pour délivrer un rapport écrit ou un rapport enregistré sur support multimédia ou transmis par voie télématique, qui indique l'apparition de situations dangereuses ou de situations extrêmes.

4. Procédé de fonctionnement du système selon selon l'une quelconque des revendications 1 à 3, dans laquelle les dispositifs de détection DPI (12) sont connectés avec une connexion sans fil à ladite unité de commande (9), qui est conçue pour détecter, au moyen de transpondeurs actifs, l'utilisation effective et continue dudit EPI par les opérateurs de travail respectifs et pour en informer ladite unité de commande (9) pour activer ou désactiver le fonctionnement desdits moyens de commande (16).

5. Procédé de fonctionnement du système selon selon l'une quelconque des revendications 1 à 4, dans laquelle lesdits dispositifs de mesure (8, 18) consistent en des dispositifs explosimétriques (17), conçus pour détecter la présence de quantités dangereuses de gaz inflammables à proximité des opérateurs et dans lesdites zones de travail (Z) et/ou des dispositifs de détection (27) de gaz toxique, conçus pour détecter la présence de gaz toxiques ou mortels.

6. Procédé de fonctionnement du système selon la revendication 1, dans laquelle est munie de moyens pour distribuer un gaz inerte destiné à empêcher la formation de mélanges explosifs; ledit système étant capable, par l'intermédiaire de ladite unité de commande (9), de définir la quantité optimale de gaz inerte à introduire dans ladite partie de tuyau (1) ou dans le récipient pour provoquer et maintenir une condition au-dessous d'un seuil de danger basée sur la mesure de la quantité de gaz explosifs et/ou de substances toxiques présents dans les substances.

7. Procédé de fonctionnement du système selon la revendication 1, dans laquelle lesdits dispositifs de mesure (8) et/ou dispositifs de détection (27) comprennent des moyens de communication avec les dispositifs EPI susmentionnés associés à l'opérateur auquel ils sont fournis, lesdits dispositifs de mesure (8) et/ou dispositifs de détection (27) étant capables de recevoir une confirmation de chacun desdits dispositifs EPI concernant une installation correcte sur l'opérateur concerné, et de transmettre cette information à ladite unité de commande (9).
